# EUROPÄISCHE PATENTSCHRIFT

(11) **EP 1 708 828 B1**
(45) Veröffentlichungstag und Bekanntmachung des Hinweises auf die Patenterteilung: **19.12.2007**
(21) Anmeldenummer: 05701012.6
(22) Anmeldetag: 12.01.2005
(51) Int. Cl.: B07C 5/04, G01B 21/04

(54) **BESTIMMUNG VON KOORDINATEN EINES WERKSTÜCKS**
METHOD FOR DETERMINING THE CO-ORDINATES OF A WORKPIECE
DETERMINATION DE COORDONNEES D'UNE PIECE

(30) Priorität: 26.01.2004 DE 102004003941
(43) Veröffentlichungstag der Anmeldung: 11.10.2006
(73) Patentinhaber: Carl Zeiss Industrielle Messtechnik GmbH, 73447 Oberkochen (DE)
(72) Erfinder: GEORGI, Bernd, 73447 Oberkochen (DE); LOTZE, Andreas, 01309 Dresden (DE)
(74) Vertreter: Brunotte, Joachim Wilhelm Eberhard
(86) Internationale Anmeldenummer: PCT/EP2005/000439
(87) Internationale Veröffentlichungsnummer: WO 2005/070567

(56) Entgegenhaltungen:
- WO-A-01/88471
- DE-A1- 10 331 419
- US-A- 5 805 289
- US-B1- 6 167 607

## Beschreibung

Die Erfindung betrifft ein Verfahren und eine Messanordnung zum Bestimmen von Koordinaten eines Werkstücks.

Insbesondere um Abmessungen und Formmerkmale eines Gegenstandes erfassen zu können, werden Koordinatenmessgeräte eingesetzt, die eine oder mehrere Oberflächen des Gegenstandes abtasten (z. B. berührungslos optisch oder durch berührendes Antasten der Oberfläche).

US 5,805,289 beschreibt eine Anordnung zum genauen Messen von Dimensionen einer Struktur, wobei zumindest eine räumliche Referenzeinrichtung an der Struktur angeordnet ist, die bekannte Dimensionen aufweist. Eine Digitalkamera wird verwendet, um eine Mehrzahl von hochaufgelösten zweidimensionalen digitalen Bildern aus zugeordneten Positionen und Ausrichtungen aufzunehmen. Ferner wird ein Koordinatenmessgerät verwendet, dessen Basis relativ zu der Struktur fest ist, um die absolute Ausrichtung und Position der Digitalkamera für jedes der zweidimensionalen Bilder zu messen und eine absolute gemessene Position von Zielen der Referenzeinrichtung im Verhältnis zu der Basis des Koordinatenmessgerätes zu messen.

US 6,167,607 B1 beschreibt ein Verfahren zum Zusammensetzen, Handhaben und für die Fabrikation, wobei Targets bzw. Markierungen an Objekten verwendet werden.

Es sind auch sogenannte alternative Messmethoden vorgeschlagen worden, bei denen eine von einer Strahlungsquelle erzeugte Messstrahlung das Material des Gegenstandes durchdringt. Beispielsweise beschreibt US 6,341,153 B1 ein System zur nicht zerstörenden Untersuchung von Teilen, wobei ein dreidimensionales Computertomografie-Bildgebungsverfahren angewendet wird. Das System weist einen tragbaren Prozessor mit einem CAD/CAM Programm, eine Röntgenstrahlungsquelle, einen Szintillationsschirm und ein Silizium-Sensorfeld auf. Der Prozessor enthält Befehle, um ein entsprechendes dreidimensionales Bild in einem Koordinatensystem des CAD/CAM Programms entstehen zu lassen.

Insbesondere bei der industriellen Serienfertigung von Werkstücken nimmt der Bedarf an hochpräzisen, zerstörungsfreien und in die Fertigungslinie integrierbaren Messtechniken zu.

Unter einem Werkstück wird in dieser Beschreibung jegliche Art von Gegenständen verstanden, die in einem Bearbeitungsprozess bearbeitet werden und/oder in einem Herstellungsprozess erzeugt und/oder verwendet werden. Beispielsweise kann das Werkstück selbst bearbeitet werden und/oder bei einer Montage mit anderen Werkstücken kombiniert werden. Das Werkstück kann auch aus verschiedenen miteinander verbundenen Teilen bestehen.

Weiterhin besteht zunehmend Bedarf, nicht nur einige ausgewählte Abmessungen des Werkstücks und ihre relative Lage zueinander zu bestimmen, sondern jedenfalls die Möglichkeit zu haben, auch schwer zugängliche Bereiche des Werkstücks vermessen zu können. Beispielsweise kann es für die Funktionsfähigkeit eines Werkstücks wesentlich auf die präzise Einhaltung der vorgegebenen Abmessungen und Ausformungen im Bereich eines Hohlraums ankommen.

Mit Messverfahren auf der Basis einer Messstrahlung, die das Material des Werkstücks durchdringt und deren Intensität gemessen wird, können zwar Informationen über die Lage solcher Hohlräume gewonnen werden, jedoch sind diese Informationen bezüglich der Koordinaten der Materialoberflächen und etwaiger Materialübergänge unscharf.

Es ist eine Aufgabe der vorliegenden Erfindung, ein Verfahren und eine Messanordnung zum Bestimmen von Koordinaten eines Werkstücks anzugeben, die eine vermessung verschiedenartiger Merkmale eines Werkstücks ermöglichen, wobei eine Optimierung des Messaufwandes und der Messkosten möglich sein soll. In besonderer Ausgestaltung soll das Verfahren bzw. die Messanordnung bei vertretbarem betriebswirtschaftlichem Aufwand für die Vermessung von Werkstücken mit hohlen oder schwer zugänglichen

Bereichen geeignet sein.

Die Erfindung ist durch die Ansprüche definiert.

Es wird ein Verfahren zum Bestimmen von Koordinaten eines Werkstücks vorgeschlagen, wobei ein erstes Koordinatensystem festgelegt wird, das bezüglich dem Werkstück fest positioniert ist, wobei erste Koordinaten des Werkstücks unter Verwendung einer ersten Koordinatenmesseinrichtung gemessen werden, wobei zweite Koordinaten des Werkstücks unter Verwendung einer zweiten Koordinatenmesseinrichtung gemessen werden und wobei aus den ersten Koordinaten und aus den zweiten Koordinaten ein gemeinsamer Satz Koordinaten in dem ersten

Koordinatensystem oder in einem zweiten bezüglich dem Werkstück fest positionierten Koordinatensystem erzeugt wird.

Insbesondere können Koordinaten einer Vielzahl der Werkstücke während und/oder nach einem Herstellungsprozess und/oder Bearbeitungsprozess der Werkstücke bestimmt werden.

Durch die Verwendung von verschiedenen Koordinatenmesseinrichtungen können verschiedenartige Merkmale des Werkstücks vermessen werden, Merkmale des Werkstücks mit unterschiedlicher Geschwindigkeit und/oder Genauigkeit vermessen werden und/oder während eines Herstellungsprozesses des Werkstücks neu hinzugekommene Merkmale lediglich mit einer der Koordinatenmesseinrichtungen vermessen werden. Es bestehen gegenüber der Messung mit nur einer Koordinatenmesseinrichtung erweiterte Möglichkeiten. Durch eine Aufteilung der zu vermessenden Merkmale des Werkstücks in Merkmale, die mit der ersten und mit der zweiten Koordinatenmesseinrichtung vermessen werden, ist eine Optimierung hinsichtlich der Messkosten, der Messpräzision und/oder der Messgeschwindigkeit möglich.

Bevorzugtermaßen werden in der ersten Koordinatenmesseinrichtung und in der zweiten Koordinatenmesseinrichtung unterschiedliche Messprinzipien zur Messung der Koordinaten angewendet. Insbesondere kommen z. B. verschiedene klassische Messprinzipien wie taktiles Abtasten von Oberflächen in Frage.

Beispielsweise ist die eine der Koordinatenmesseinrichtungen eine Einrichtung mit einem Tastkopf, der das Werkstück unter Berührung einer Oberfläche antastet und auf diese Weise die Koordinaten bestimmt. Auch berührungslos die Oberfläche des Werkstücks abtastende Einrichtungen können eingesetzt werden (z. B. optisches Abtasten von Oberflächen, insbesondere durch die sogenannte Streifen- oder Gitterprojektion).

Vorzugsweise wird als die andere der Koordinatenmesseinrichtungen eine Einrichtung verwendet, die zum Bestimmen von Informationen über das Werkstück Strahlung einsetzt, die das Material des Werkstücks durchdringt und dabei geschwächt und/oder abgelenkt wird. Beispiele hierfür sind Computertomografie-Einrichtungen auf der Basis von Röntgen-, Elektronen- und/oder Positronenstrahlung. Insbesondere bei solchen Systemen werden die Außen- und Innenkonturen des Werkstücks unscharf erfasst, wobei z. B. ein Übergang von geringen Grauwerten zu hohen Grauwerten eine Oberfläche oder Kante des Werkstücks darstellt. Auch ist die Art der Unschärfe, die insbesondere durch die Extinktion und die Beugung der Strahlung bestimmt ist, von dem Material des Werkstücks abhängig. Die Erfindung ist jedoch nicht auf die Verwendung derartiger Einrichtungen als die andere Koordinatenmesseinrichtung beschränkt. Vielmehr können beispielsweise auch berührungslos die Oberfläche des Werkstücks abtastende Einrichtungen eingesetzt werden, die z. B. Oberflächen des Werkstücks optisch abtasten (insbesondere durch die sogenannte Streifen- oder Gitterprojektion).

Allgemeiner formuliert wird vorzugsweise eine erste Koordinatenmesseinrichtung verwendet, die präzisere (erste) Koordinaten der von ihr erfassten Konturen liefert und werden die von der zweiten Koordinatenmesseinrichtung ermittelten zweiten Koordinaten unter Verwendung der ersten Koordinaten auf ein bezüglich dem Werkstück fest positioniertes Koordinatensystem bezogen. Insbesondere kann hierfür ein aus den ersten Koordinaten ermittelter Abstand von Messpunkten (z. B. eine Länge oder ein Durchmesser des Werkstücks) verwendet werden. Liegt der Abstand fest, kann z. B. aus dem Abstand von Grauwerten gleicher Stärke an verschiedenen unscharfen Konturen ermittelt werden, wo sich die Konturen des Werkstücks befinden müssen. Vorzugsweise wird nicht nur eine Abmessung zur Skalierung und/oder Positionierung der aus der zweiten Koordinatenmesseinrichtung ermittelten Informationen verwendet, sondern werden zumindest zwei Abmessungen verwendet. Dabei können die Abmessungen redundante und/oder nicht redundante Informationen enthalten und/oder können in verschiedene und/oder gleiche Richtungen orientiert sein. Durch eine Redundanz erhöht sich die Zuverlässigkeit der Skalierung und/oder Positionierung, durch nicht redundante Abmessungen kann in unterschiedlichen Richtungen skaliert und/oder positioniert werden.

Noch allgemeiner formuliert wird vorgeschlagen, dass durch die zweite Koordinatenmesseinrichtung Messwerte des Werkstücks (oder eines Referenzgegenstandes) in einem örtlichen Bereich gemessen werden, in dem sich ein Rand oder Materialübergang des Werkstücks (oder des Referenzgegenstandes) be:findet, wobei die durch die erste Koordinatenmesseinrichtung gemessenen ersten Koordinaten dazu verwendet werden, eine Position des Randes oder des Materialübergangs und die Messwerte einander zuzuordnen. Im Fall der Messung eines Referenzgegenstandes betreffen auch die ersten Koordinaten den Referenzgegenstand.

Die Bezeichnung "erste" Koordinatenmesseinrichtung ist nicht dahingehend zu verstehen, dass die von ihr durchgeführte Messung oder von ihr durchgeführten Messungen vor der Messung oder den Messungen der zweiten Koordinatenmesseinrichtung stattfindet bzw. stattfinden. Vielmehr können die Messungen in beliebiger Reihenfolge, gleichzeitig und/oder wiederholt durchgeführt werden. Auch können ein oder mehrere weitere Koordinatenmesseinrichtungen vorgesehen sein. In der Praxis kann sich die Zeit der Messungen danach richten, wie die Messungen am besten in eine Produktionslinie und/oder Montagelinie integriert werden.

Die Erfindung kann insbesondere den Fall betreffen, dass das Werkstück zwischen den Messungen mit den beiden Koordinatenmesseinrichtungen in eine veränderte Position und/oder Lage gebracht wird. Dabei wird das Werkstück beispielsweise von der einen zu der anderen Messeinrichtung bewegt und/oder seine Lage und/oder Position so verändert, dass zusätzliche Messinformationen erhältlich sind.

Zusätzlich ist es (z. B. bei Koordinatenmesseinrichtungen mit das Werkstück durchdringender Strahlung) möglich oder u. U. sogar erforderlich, das Werkstück auch während der Messung zu bewegen (z. B. um Koordinaten in einem dreidimensionalen Koordinatensystem zu erhalten).

Die ersten Koordinaten und/oder die zweiten Koordinaten können in einem Referenzkoordinatensystem oder jeweils in einem Referenzkoordinatensystem gemessen werden.

Bei der Erfindung werden das Werkstück und zumindest ein Referenzgegenstand fest miteinander verbunden, wobei durch die erste Koordinatenmesseinrichtung und durch die zweite Koordinatenmesseinrichtung Referenzkoordinaten des oder der Referenzgegenstände gemessen werden und wo bei der gemeinsame Satz Koordinaten unter Verwendung der Referenzkoordinaten erzeugt wird. Dabei können die erste und die zweite Koordinatenmesseinrichtung verschiedene Referenzkoordinatensysteme verwenden, bzgl. denen die ersten bzw. zweiten Koordinaten gemessen werden. Beispielsweise ist dies dann sinnvoll, wenn das Werkstück von der einen Koordinatenmesseinrichtung in einer Messposition vermessen wird, in der der Referenzgegenstand oder die Referenzgegenstände nicht in der gleichen Weise erfassbar sind wie von der anderen Koordinatenmesseinrichtung. In diesem Fall können sich die Koordinatenmesseinrichtungen z. B. auf verschiedene Referenzgegenstände oder verschiedene Merkmale desselben Referenzgegenstandes beziehen, um das Referenzkoordinatensystem zu ermitteln. Bevorzugt wird jedoch, dass sich die Koordinatenmesseinrichtungen auf dasselbe Referenzkoordinatensystem beziehen, und die Werkstück-Koordinaten in diesem Koordinatensystem gemessen werden. Diese Ausgestaltung vereinfacht die Erzeugung des gemeinsamen Satzes von Koordinaten in dem Werkstück-festen Koordinatensystem.

Der oder die Referenzgegenstände sind bzw. werden unmittelbar und/oder indirekt mit dem Werkstück verbunden.

Insbesondere können durch die erste Koordinatenmesseinrichtung, durch die zweite Koordinatenmesseinrichtung oder durch eine weitere Koordinatenmesseinrichtung Koordinaten des Werkstücks und Referenzkoordinaten des oder der Referenzgegenstände gemessen werden, wobei daraus Informationen über eine relative Lage und Orientierung des oder der Referenzgegenstände einerseits und des Werkstücks andererseits gewonnen werden und wobei der gemeinsame Satz Koordinaten unter Verwendung der Informationen über die relative Lage und Orientierung erzeugt wird. Bei unveränderter relativer Lage und Orientierung kann dann eine absolute Orientierung und/oder Position des oder der Referenzgegenstände mit dem daran befestigten Werkstück zwischen der Messung der ersten Koordinaten und der Messung der zweiten Koordinaten verändert werden. Zur Gewinnung der Informationen über die relative Lage und Orientierung werden beispielsweise einerseits Koordinaten zumindest eines charakteristischen Formmerkmals des Werkstücks in einem bzgl. der jeweiligen Koordinatenmesseinrichtung festliegenden Koordinatensystem gemessen und andererseits Koordinaten des oder der Referenzgegenstände in demselben Koordinaten System gemessen.

Bei dem Referenzgegenstand oder den Referenzgegenständen kann es sich um beliebige geeignete Gegenstände handeln. Insbesondere sind Kugeln geeignet, da diese aus verschiedenen Richtungen und von verschiedenen Koordinatenmesseinrichtungen zuverlässig und präzise erfasst (abgetastet oder auf andere Weise erfasst) werden können.

Erfindungsgemäß ist das Werkstück während den von den Koordinatenmesseinrichtungen durchgeführten Messungen auf einer Palette befestigt (hierauf wird unter Bezugnahme auf die beigefügten Figuren noch näher eingegangen). Die Palette weist beispielsweise eine formstabile Platte auf, auf der das Werkstück angeordnet ist. Eine solche Platte hat den Vorteil, dass das Werkstück lediglich von einer Seite abgedeckt ist. An der Palette wiederum ist bzw. sind der oder die Referenzgegenstände befestigt. Die Palette mit dem daran befestigten Werkstück kann beispielsweise von einer Messstation zu einer anderen Messstation bewegt bzw. transportiert werden und kann in den Messstationen beliebig ausgerichtet werden. Es kann ein anderer Gegenstand an dem Werkstück befestigt werden, der zumindest ein Referenzgegenstand ist oder an dem der zumindest ein Referenzgegenstand angeordnet ist oder wird. Wenn zumindest eine der Messeinrichtungen eine Messstrahlung verwendet, die das Material des Werkstücks durchstrahlt, wird für die Palette vorzugsweise ein Material gewählt, das einen kleinen Absorptionskoeffizienten für die Messstrahlung aufweist.

Insbesondere um bei einer serienweisen Vermessung von Werkstücken den Aufwand bei der Bestimmung des Referenzkoordinatensystems zu reduzieren, wird bzw. werden der oder die Referenzgegenstände mit dem daran befestigten Werkstück in eine definierte Position bewegt, die bezüglich der ersten Koordinatenmesseinrichtung und/oder bezüglich der zweiten Koordinatenmesseinrichtung festgelegt ist. Zumindest ein Teil der Referenzkoordinaten, die ersten Koordinaten und/oder die zweiten Koordinaten werden gemessen, während sich der oder die Referenzgegenstände in der definierten Position befindet bzw. befinden. Durch die definierte Position ist auch die Lage des Referenzkoordinatensystems bekannt. Sind mehrere Referenzgegenstände oder Formmerkmale eines Referenzgegenstandes gleichzeitig in jeweils einer definierten Position, ist außerdem auch eine Orientierung des Referenzkoordinatensystems bekannt.

Zu einem nicht beanspruchten Beispiel gehört außerdem eine Messanordnung zum Bestimmen von Koordinaten eines Werkstücks, wobei die Messanordnung folgendes aufweist:
- eine erste Koordinatenmesseinrichtung zur Messung von ersten Koordinaten des Werkstücks,
- eine zweite Koordinatenmesseinrichtung zur Messung von zweiten Koordinaten des Werkstücks,
- eine Bestimmungseinrichtung, die mit der ersten und der zweiten Koordinatenmesseinrichtung verbunden ist und die ausgestaltet ist, aus den ersten Koordinaten und aus den zweiten Koordinaten einen gemeinsamen Satz Koordinaten des Werkstücks zu erzeugen, wobei der gemeinsame Satz Koordinaten in einem Koordinatensystem definiert ist, das bezüglich dem Werkstück fest positioniert ist.

Insbesondere kann die Messanordnung eine Bewegungseinrichtung (z. B. ein Förderband und/oder einen Rollenförderer) aufweisen, die ausgestaltet ist, das Werkstück in eine Messposition zu bringen, in der die erste Koordinatenmesseinrichtung und/oder die zweite Koordinatenmesseinrichtung die ersten bzw. die zweiten Koordinaten des Werkstücks messen können. Diese Bewegungseinrichtung kann insbesondere ausgestaltet sein, eine Vielzahl der Werkstücke nacheinander in die Messposition zu bringen.

Ferner gehören zu einem nicht beanspruchten Beispiel:
- ein Computerprogramm mit Programmcode-Mitteln, die bei Ablauf auf einem Computer oder Computer-Netzwerk zumindest denjenigen Teil oder diejenigen Teile des erfindungsgemäßen Verfahrens in einer seiner Ausgestaltungen ausführen, der bzw. die eine Steuerung zumindest einer der Messeinrichtungen und/oder die Verarbeitung der durch die Messungen erhaltenen Messinformationen betrifft bzw. betreffen. Insbesondere können die Programmcode-Mittel in Form einer Datenstruktur auf einem computerlesbaren Datenträger gespeichert sein;
- der Datenträger mit den gespeicherten Programmcode-Mitteln; und
- ein entsprechendes Computerprogramm-Produkt. Dabei wird unter einem Computer-Programmprodukt das Programm oder die Programmcode-Mittel als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden.

Im Folgenden wird die Erfindung anhand von Ausführungsbeispielen näher erläutert, die in den Figuren schematisch dargestellt sind. Die Erfindung ist jedoch nicht auf die Beispiele beschränkt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: eine schematische Darstellung einer Koordinatenmessanordnung mit zwei Koordinatenmesseinrichtungen;
- Fig. 2: eine Seitenansicht einer Fördereinrichtung zum Fördern einer Mehrzahl von Werkstücken nacheinander zu einer Messstation, in der Koordinaten des Werkstücks gemessen werden;
- Fig. 3: eine Ansicht von oben auf die Fördereinrichtung gemäß Fig. 2, wobei das Werkstück in der Messstation von einer Messstrahlung einer Koordinatenmesseinrichtung durchstrahlt wird;
- Fig. 4: eine Ansicht von oben auf eine weitere Fördereinrichtung, die die Werkstücke zu einer zweiten Messstation fördert, in der die Werkstücke von einer Koordinatenmesseinrichtung in Portalbauweise abgetastet werden;
- Fig. 5: die Messstation gemäß Fig. 4 in einer Seitenansicht:
- Fig. 6: eine Prinzipdarstellung einer Koordinatenmesseinrichtung, die ein Werkstück durchstrahlt, das eine Ausnehmung aufweist;
- Fig. 7: einen Verlauf von Messwerten, die durch die in Fig. 6 gezeigte Koordinatenmesseinrichtung gemessen wurden, entlang einer Koordinatenachse;
- Fig. 8: ein Flussdiagramm, das eine besonders bevorzugte Ausführungsform eines Verfahrens zum Bestimmen von Werkstück-Koordinaten darstellt;
- Fig. 9: ein Diagramm, das einen Aspekt der Bestimmung eines gemeinsamen Koordinatensatzes aus Messungen zweier Koordinatenmesseinrichtungen darstellt.

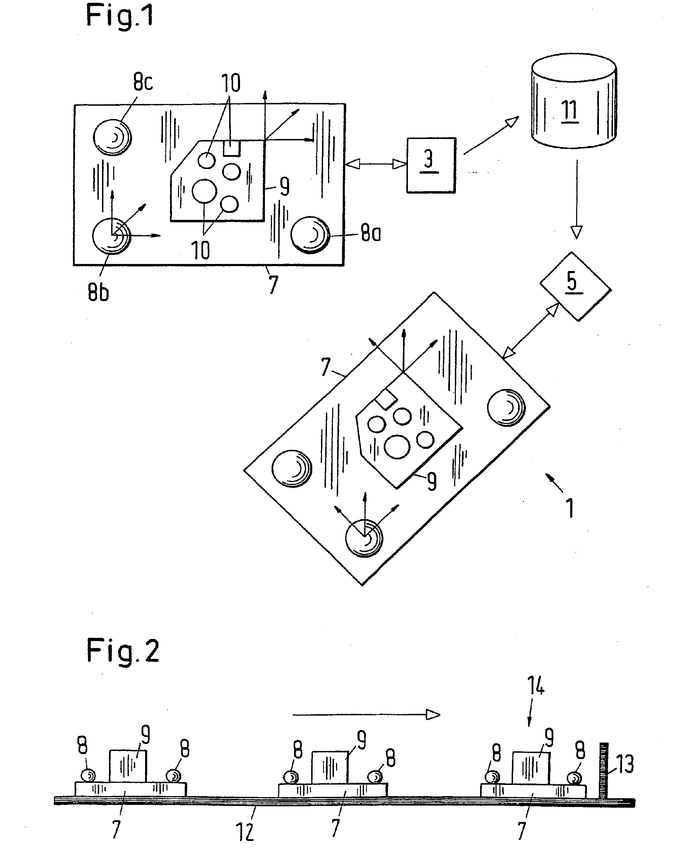

Die in Fig. 1 dargestellte Messanordnung 1 zum Bestimmen von Werkstück-Koordinaten weist eine erste Koordinatenmesseinrichtung 3 und eine zweite Koordinatenmesseinrichtung 5 auf. Die Figur zeigt ein Werkstück 9 mit einer Mehrzahl von Formmerkmalen, die mit dem Bezugszeichen 10 bezeichnet sind. Das Werkstück 9 ist in diesem Beispiel auf einem palettenartigen Träger 7 befestigt, z. B. festgeklemmt, festgeschraubt und/oder festgeklebt. Ebenfalls auf dem Träger 7 befestigt sind drei voneinander beabstandete Referenzgegenstände 8a, 8b, 8c, die jeweils im Bereich einer Ecke einer rechteckigen Oberfläche des Trägers 7 angeordnet sind. An einem (8b) der Referenzgegenstände ist mit drei Pfeilen angedeutet, dass die drei Referenzgegenstände ein Koordinatensystem definieren, das bezüglich dem Träger 7 fest positioniert ist. Dieses Koordinatensystem wird in der weiteren Beschreibung als Referenzkoordinatensystem bezeichnet und mit RKS abgekürzt. Die Referenzgegenstände 8 sind beispielsweise Kugeln.

Ebenfalls mit drei Pfeilen angedeutet ist ein werkstückeigenes Koordinatensystem. WKS. Auf Grund der Befestigung des Werkstücks 9 an dem Träger 7 bleiben das RKS und das WKS in einer näherungsweise unveränderten relativen Position und relativen Orientierung zueinander. Es ist daher möglich, Koordinaten des Werkstücks 9 durch die verschiedenen Koordinatenmesseinrichtungen 3, 5 (und ggf. durch weitere Koordinatenmesseinrichtungen) in dem RKS zu messen und zu einem gewünschten Zeitpunkt in das WKS umzurechnen.

Auf Grund einer möglichen Veränderung der Temperatur, die während einer Messung durch eine der Koordinatenmesseinrichtungen 3, 5 und/oder zwischen Messungen durch verschiedene der Koordinatenmesseinrichtungen 3, 5 stattfinden kann, können Veränderungen der Relativposition und der Skalierungen des RKS und des WKS auftreten. Es wird daher vorgeschlagen, die Temperatur zu messen und unter Berücksichtigung der thermischen Ausdehnungskoeffizienten der Materialien des Trägers 7 und des Werkstücks 9 die Veränderung zu berechnen. Vorzugsweise ist zur Messung der Temperatur ein Temperatursensor in den Träger 7 integriert.

In der Darstellung von Fig. 1 ist die Messung der Koordinaten des Werkstücks 9 durch Pfeile angedeutet, wobei die erste Koordinatenmesseinrichtung 3 und die zweite Koordinatenmesseinrichtung 5 Koordinaten desselben Werkstücks 9 messen, gleichzeitig und/oder nacheinander.

Die entsprechenden gemessenen Daten können z. B. von der ersten Koordinatenmesseinrichtung 3 zu einer Datenverarbeitungseinrichtung 11 übertragen werden, die die relative Position und Orientierung des RKS und des WKS berechnet und diese Informationen an die zweite Koordinatenmesseinrichtung 5 überträgt. Die Datenverarbeitungseinrichtung 11 kann alternativ oder zusätzlich weitere der in dieser Beschreibung beschriebenen Funktionen übernehmen, z. B. die Umrechnung der von den Koordinatenmesseinrichtungen 3, 5 ermittelten Koordinaten in das WKS und/oder die Temperaturkorrektur.

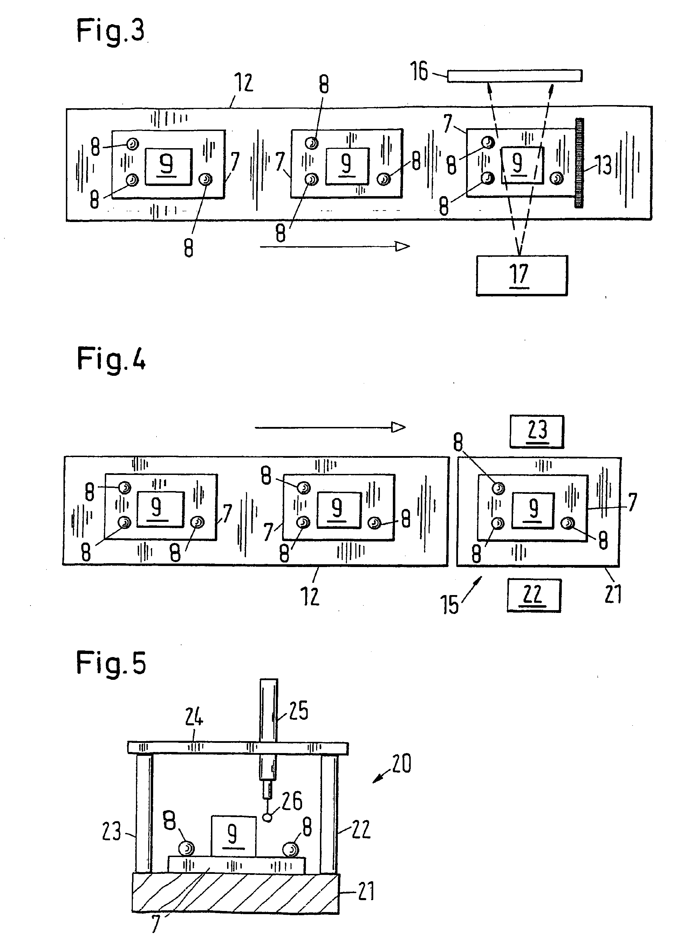

Fig. 2 zeigt in Kombination mit Fig. 3 bis Fig. 5 eine besonders bevorzugte Ausführungsform der erfindungsgemäßen Koordinatenmessanordnung. Die Messanordnung weist eine Fördereinrichtung 12 auf, auf der eine Mehrzahl von Werkstücken 9 angeordnet ist. Bei den Werkstücken 9 kann es sich beispielsweise um die in Fig. 1 dargestellten Werkstücke 9 handeln, die auf einer Palette 7 mit daran befestigten Referenzgegenständen 8 angebracht sind. Die Fördereinrichtung 12 fördert eine Vielzahl der Werkstücke 9 nacheinander zu einer ersten Messstation 14, von der in Fig. 2 lediglich ein Anschlag 13 dargestellt ist. Etwas später als in der in Fig. 2 dargestellten Momentaufnahme erreicht eines der Werkstücke 9 den Anschlag 13 und somit eine definierte Position auf dem Förderweg. In dieser Position wird das Werkstück 9 mit Röntgenstrahlung aus einer Strahlungsquelle 17 durchstrahlt oder optisch gemessen. Eine aus Sicht der Strahlungsquelle 17 hinter dem Werkstück 9 angeordnete Sensoreinrichtung 16 zur Aufnahme eines zweidimensionalen Bildes der auftreffenden Röntgenstrahlung dient dazu, die auf Grund der Schwächung und Beugung der Röntgenstrahlung durch das Werkstück 9 erzeugten Informationen zu erfassen. Beispielsweise indem die Strahlungsquelle 17 in zumindest eine andere Position gebracht wird, aus der die Röntgenstrahlung das Werkstück 9 aus einer anderen Richtung erreicht, werden weitere Röntgenbilder aufgenommen und durch eine nicht in Fig. 3 dargestellte Datenverarbeitungsanlage ein dreidimensionales Röntgenbild des Werkstücks 9 erzeugt. Die Messstation 14 ist so ausgelegt, dass auch die auf der Palette 7 angeordneten Referenzgegenstände 8 in den Röntgenbildern mit enthalten sind.

Fig. 4 zeigt eine weitere Fördereinrichtung 12 der Messanordnung, auf der dieselben Werkstücke 9 wie von der in Fig. 3 gezeigten Fördereinrichtung, entweder vorher oder nachher, zu einer zweiten Messstation 15 gefördert werden. Die zweite Messstation 15 weist einen Messtisch 21 auf, der von der Fördereinrichtung 12 beabstandet angeordnet ist. Von der in Fig. 4 gezeigten Fördereinrichtung 12 gelangt das Werkstück 9 beispielsweise durch einen beweglichen Greifer auf den Messtisch 21. Wie aus Fig. 5 erkennbar ist, handelt es sich bei der Messstation 15 um ein Koordinatenmessgerät 20 in Portalbauweise. Zwei längs in horizontaler Richtung verschieblich gelagerte Säulen 22, 23 des Koordinatenmessgeräts 20 tragen eine Querführung 24, von der eine Pinole 25 querbeweglich gelagert ist. Die Pinole 25 und ein an ihrem unteren Ende befestigter Tastkopf 26 sind in vertikaler Richtung beweglich, sodass der Tastkopf 26 beliebige Positionen innerhalb eines Messbereichs des Koordinatenmessgeräts 20 erreichen kann.

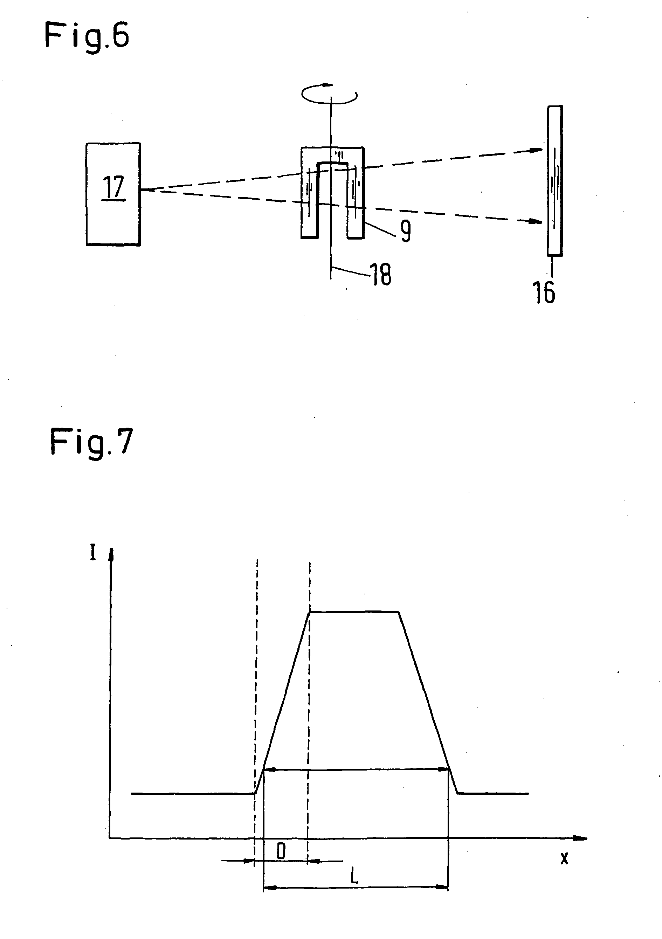

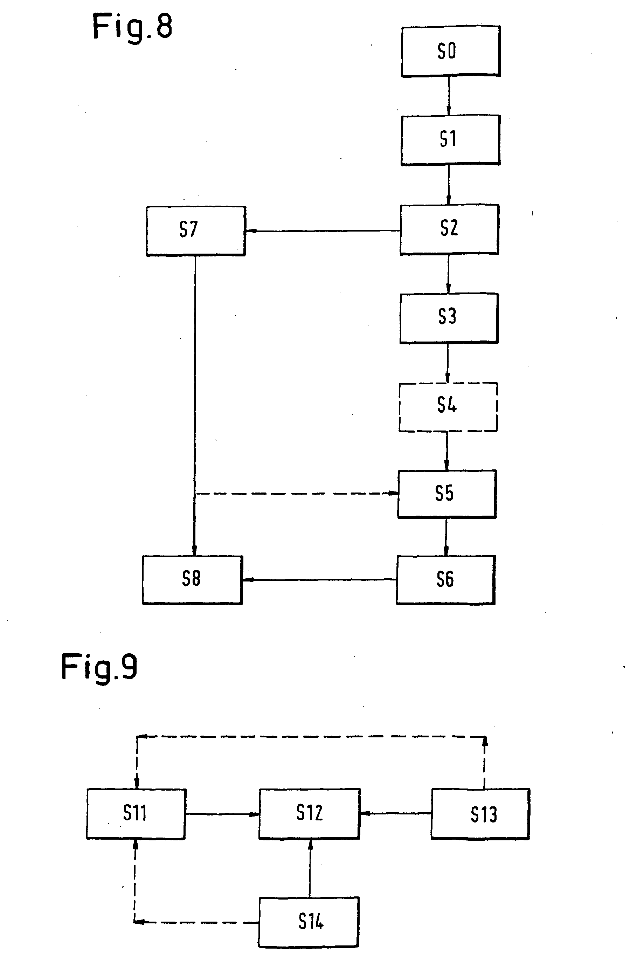

Zur Messung der Koordinaten des Werkstücks 9 tastet der Tastkopf 26 unter Berührung der jeweiligen Oberflächen das Werkstück 9 und die Referenzgegenstände 8 auf der Palette 7 ab und werden dreidimensionale Koordinaten des Werkstücks 9 in einem durch die Referenzgegenstände 8 definierten Koordinatensystem aufgenommen. Wie noch näher unter Bezugnahme auf Fig. 8 und Fig. 9 beschrieben wird, ist es somit möglich, aus den in der ersten Messstation 14 und aus den in der zweiten Messstation 15 ermittelten Koordinaten des Werkstücks 9 einen gemeinsamen Satz Koordinaten in einem werkstückeigenen Koordinatensystem zu erzeugen. Weiterhin ist es möglich, wie noch unter Bezugnahme auf Fig. 6 und Fig. 7 näher erläutert wird, die Lage von Konturen des Werkstücks 9, die in der ersten Messstation unscharf aufgenommen werden, mit der in der zweiten Messstation erreichbaren Genauigkeit zu bestimmen.

Fig. 6 zeigt eine Strahlungsquelle 17 zur Erzeugung von Röntgenstrahlung (oder einer anderen Strahlung, die geeignet ist, das Material eines Werkstücks 9 zu durchdringen), ein Werkstück 9 und eine Sensoreinrichtung zur Aufnahme eines zweidimensionalen Bildes der auftretenden Strahlung. Wie durch eine Drehachse 18 angedeutet ist, kann das Werkstück 9 gedreht werden und dadurch unter verschiedenen Blickwinkeln eine Vielzahl von zweidimensionalen Bildern aufgenommen werden, sodass ein dreidimensionales Bild des Werkstücks 9 rechnerisch ermittelbar ist.

Das Werkstück 9 weist eine tiefe und schmale Ausnehmung auf, deren Oberflächenkoordinaten mit Koordinatenmessgeräten, welche die Oberflächen abtasten, nicht oder nur eingeschränkt gemessen werden können. Es wird daher vorgeschlagen, eine Messeinrichtung von der Art, wie sie in Fig. 6 dargestellt ist, mit einer weiteren, die Oberfläche abtastenden Messeinrichtung zu kombinieren und die gewünschten Koordinaten des Werkstücks aus Messungen mit beiden Messeinrichtungen zu berechnen.

Fig. 7 zeigt (aus Gründen der Übersichtlichkeit und einfachen Darstellung nur in einer Dimension) Ergebnisse eines dreidimensionalen räumlichen Strahlungsabsorptionsfeldes, das aus einer Vielzahl von zweidimensionalen Bildern der in Fig. 6 gezeigten Messanordnung berechnet wurde. Das Strahlungsabsorptionsfeld entspricht der durch das Werkstück 9 bewirkten Strahlungsabsorption an der jeweiligen Stelle des dreidimensionalen Raumes. In dem Diagramm von Fig. 7 ist die Absorption I eines Werkstückbereiches in x-Richtung dargestellt, der eine Länge L hat. Mit anderen Worten: in x-Richtung liegen die Materialoberflächen des Werkstückbereichs um eine Länge L voneinander entfernt. Zwischen den Materialoberflächen befindet sich ein hinsichtlich der Strahlungsabsorption homogenes Material des Werkstücks.

Wie aus der schematischen Darstellung in Fig. 7 erkennbar ist, nimmt die gemessene Absorption an den Materialoberflächen nicht stufenartig zu bzw. ab. Vielmehr werden die Materialoberflächen durch die Absorptionsmessung nur unscharf erfasst. Es besteht in x-Richtung eine Unschärfe der Breite D. Ist die Länge L bekannt, kann die tatsächliche Lage der Materialoberflächen in x-Richtung bestimmt werden. Beispielsweise kann hierfür angenommen werden, dass die beiden einander gegenüberliegenden Materialoberflächen gleich unscharfe Absorptionsverläufe aufweisen. In diesem Fall ergibt sich die Lage der Materialoberflächen aus dem Abstand von zwei gleich großen Absorptionswerten, wobei der Abstand gleich der Länge L ist. Die Länge L wird beispielsweise aus einer exakten Messung durch ein die Materialoberflächen abtastendes Koordinatenmessgerät bestimmt. Der gesamte Vorgang kann als Kalibrierung bezeichnet werden. Alternativ oder zusätzlich kann die Kalibrierung anhand zumindest eines Referenzgegenstandes durchgeführt werden, z. B. an Materialoberflächen der auf der Palette 7 befestigten Kugeln 8.

Eine besonders bevorzugte Ausführungsform des erfindungsgemäßen Verfahrens wird nun anhand des Flussdiagramms von Fig. 8 beschrieben.

In einem Schritt S0 wird zunächst ein Werkstück mit einer Mehrzahl von Referenzgegenständen fest verbunden und in einem folgenden Schritt S 1 in eine erste Messposition gebracht, in der eine erste Koordinatenmesseinrichtung Koordinaten des Werkstücks und der Referenzgegenstände messen kann. Anstelle einer Mehrzahl von Referenzgegenständen kann auch ein einziger Referenzgegenstand fest mit dem Werkstück verbunden werden, wobei der Referenzgegenstand von einer Koordinatenmesseinrichtung erfassbare Merkmale (z. B. Formmerkmale und/oder optisch erkennbare Merkmale) aufweist, die die Bestimmung eines durch den Referenzgegenstand definierten Koordinatensystems durch die Koordinatenmesseinrichtung ermöglichen.

In einem folgenden Schritt S2 werden das Werkstück und die Referenzgegenstände von der ersten Koordinatenmesseinrichtung vermessen und werden die relative Position und Orientierung eines durch die Referenzgegenstände definierten Referenzkoordinatensystems RKS einerseits und eines werkstückeigenen Koordinatensystems WKS andererseits bestimmt. Die Informationen über die relative Position und Orientierung des RKS und des WKS werden in einem anschließenden Schritt S7 gespeichert. Die Bestimmung der relativen Position und Orientierung kann alternativ oder zusätzlich zu einem späteren Zeitpunkt erfolgen und insbesondere durch eine zweite Koordinatenmesseinrichtung durchgeführt werden.

In einem auf den Schritt S2 folgenden Schritt S3 werden von der ersten Koordinatenmesseinrichtung erste Koordinaten des Werkstücks in dem RKS gemessen.

Hat die Bestimmung der relativen Position und Orientierung des RKS und des WKS bereits stattgefunden und hat sich die Lage des RKS relativ zu der ersten Koordinatenmesseinrichtung seitdem nicht verändert, können die ersten Koordinaten unmittelbar in dem WKS gemessen und/oder gespeichert werden.

Es folgt nun ein optionaler Schritt S4, in dem das Werkstück mit den daran befestigten Referenzgegenständen (oder dem Referenzgegenstand) in eine veränderte Lage und/oder Position gebracht wird. Vor dem nächsten Schritt S5 ist das Werkstück auf jeden Fall in eine Lage und Position zu bringen, sodass zumindest Koordinaten eines Teils des Werkstücks von einer zweiten Koordinatenmesseinrichtung gemessen werden können. Weiterhin muss es der zweiten Koordinatenmesseinrichtung in dieser Lage und Position möglich sein, das RKS selbst zu bestimmen (d. h. den Bezug zu seinem eigenen Koordinatensystem herzustellen) oder zumindest ein weiteres, zweites RKS zu bestimmen. Durch Informationen über die Referenzgegenstände oder den Referenzgegenstand können Koordinaten, die in verschiedenen der Referenzkoordinatensystemen vorliegen, in ein gemeinsames Koordinatensystem umgerechnet werden.

Insbesondere können zwei oder mehrere verschiedene RKS von einer der Koordinatentnesseinrichtungen bestimmt werden und jeweils die entsprechenden relativen Lagen und Orientierungen des RKS und des WKS ermittelt werden. Dies ist insbesondere dann von Vorteil, wenn der anderen Koordinatenmesseinrichtung nicht dieselben Merkmale des oder der Referenzgegenstände zugänglich sind und daher ein bestimmtes RKS nicht von ihr bestimmt werden kann.

Im folgenden Schritt S5 bestimmt die zweite Koordinatenmesseinrichtung das RKS (oder das zweite RKS). Optional werden der zweiten Koordinatenmesseinrichtung vor oder nach Ausführung des folgenden Schritts S6 die von der ersten Koordinatenmesseinrichtung ermittelten Informationen über die relative Lage und Orientierung des RKS und des WKS zugeführt. In Schritt S6 werden nun durch die zweite Koordinatenmesseinrichtung zweite Koordinaten des Werkstücks gemessen. Schritt S5 und Schritt S6 können auch vertauscht werden. Stehen die Informationen über die relative Lage und Orientierung des RKS und des WKS bereits vor der Messung der zweiten Koordinaten zur Verfügung, können die zweiten Koordinaten unmittelbar in dem WKS gemessen und/oder gespeichert werden.

In einem abschließenden Schritt S8 wird nun aus den ersten Koordinaten und aus den zweiten Koordinaten ein gemeinsamer Satz Koordinaten erzeugt, und zwar in einem Koordinatensystem, das bezüglich des Werkstücks festliegt. Insbesondere können in diesem Schritt die jeweils in dem RKS oder in einem der RKS gemessenen ersten und zweiten Koordinaten - unter Ausnutzung der Informationen über die relative Lage und Orientierung des Werkstücks und des oder der Referenzgegenstände - in das WKS umgerechnet werden. Weiterhin kann in diesem Schritt, falls erforderlich, die oben beschriebene Kalibrierung durchgeführt werden.

Unter Bezugnahme auf Fig. 9 soll noch verdeutlicht werden, wie die Informationen über die Lage und Position des oder der Referenzkoordinatensysteme relativ zu dem Werkstück (im Folgenden: "die Relativinformation") genutzt werden können. Die in Fig. 9 dargestellten Schritte können auch jeweils eine als Hardware und/oder Software realisierte Einrichtung sein. Schritt S 11 entspricht in diesem Fall einer Einrichtung zur Ermittlung der Relativinformation, Schritt S12 einer Auswertungseinrichtung, die beispielsweise den Schritt S8 von Fig. 8 ausführt, Schritt S14 einem Datenprozessor einer ersten Koordinatenmesseinrichtung und Schritt S13 einem Datenprozessor einer zweiten Koordinatenmesseinrichtung.

Gemäß einem in Fig. 9 durch ununterbrochene Linien dargestellten Ausführungsbeispiel werden in Schritt S 13 und Schritt S14 die zweiten bzw. die ersten Koordinaten des Werkstücks in dem oder einem der Referenzkoordinatensysteme bestimmt. Ferner wird die Relativinformation in Schritt S11 ermittelt. Die Schritte S11, S 13 und S 14 können in beliebiger zeitlicher Reihenfolge und/oder gleichzeitig durchgeführt werden. Auch kann zumindest eine weitere Koordinatenmesseinrichtung vorgesehen sein, die dritte oder weitere Koordinaten des Werkstücks misst und/oder die für die Bestimmung der Relativinformation erforderlichen Messungen durchführt. In Schritt S12 werden die gemessenen Koordinaten des Werkstücks unter Verwendung der Relativinformation verarbeitet, um den gemeinsamen Satz Koordinaten zu erzeugen.

Wie durch die unterbrochenen Linien in Fig. 9 angedeutet ist, kann die Relativinformation aus gemessenen Koordinaten der ersten und/oder zweiten Koordinatenmesseinrichtung bestimmt werden. Enthalten die gemessenen Koordinaten (des Werkstücks und des oder der Referenzgegenstände) die entsprechenden Informationen, die die Grundlage für die Relativinformation bilden, bedeutet dies, dass die jeweilige Koordinatenmesseinrichtung die Koordinaten sowohl in dem Referenzkoordinatensystem als auch in dem werkstückeigenen Koordinatensystem (oder in dem Koordinatensystem der Koordinatenmesseinrichtung) messen kann bzw. in eines der Koordinatensysteme umrechnen kann. Folglich ist eine zentrale Auswertung der gemessenen Koordinaten zur Bestimmung des gemeinsamen Satzes Koordinaten, nicht zwingend erforderlich. Vielmehr kann z. B. eine der Koordinatenmesseinrichtungen diese Funktion übernehmen.

## Patentansprüche

1. Verfahren zum Bestimmen von Koordinaten eines Werkstücks (9), wobei
- ein erstes Koordinatensystem festgelegt wird, das bezüglich dem Werkstück (9) fest positioniert ist,
- erste Koordinaten des Werkstücks (9) unter Verwendung einer ersten Koordinatenmesseinrichtung (3) gemessen werden,
- zweite Koordinaten des Werkstücks (9) unter Verwendung einer zweiten Koordinatenmesseinrichtung (5) gemessen werden,
- aus den ersten Koordinaten und aus den zweiten Koordinaten ein gemeinsamer Satz Koordinaten in dem ersten Koordinatensystem oder in einem zweiten bezüglich dem Werkstück (9) fest positionierten Koordinatensystem erzeugt wird,
- das Werkstück (9) während den von den Koordinatenmesseinrichtungen (3, 5) durchgeführten Messungen auf einer Palette (7) befestigt ist,
- an der Palette (7) zumindest ein Referenzgegenstand (8) befestigt ist,
- durch die erste Koordinatenmesseinrichtung (3) und durch die zweite Koordinatenmesseinrichtung (5) Referenzkoordinaten des oder der Referenzgegenstände (8) gemessen werden und wobei der gemeinsame Satz Koordinaten unter Verwendung der Referenzkoordinaten erzeugt wird.

2. Verfahren nach Anspruch 1, wobei die Palette (7) mit dem daran befestigten Werkstück von einer ersten Messstation (14), in der das Werkstück (9) von einer der Koordinatenmesseinrichtungen (3, 5) vermessen wird, zu einer zweiten Messstation (15), in der das Werkstück (9) von der anderen Koordinatenmesseinrichtung (3, 5) vermessen wird, transportiert wird.

3. Verfahren nach Anspruch 1 oder 2, wobei durch die erste Koordinatenmesseinrichtung (3), durch die zweite Koordinatenmesseinrichtung (5) oder durch eine weitere Koordinatenmesseinrichtung Koordinaten des Werkstücks (9) und Referenzkoordinaten des oder der Referenzgegenstände (8) gemessen werden, wobei daraus Informationen über eine relative Lage und Orientierung des oder der Referenzgegenstände (8) einerseits und des Werkstücks (9) andererseits gewonnen werden und wobei der gemeinsame Satz Koordinaten unter Verwendung der Informationen über die relative Lage und Orientierung erzeugt wird.

4. Verfahren nach einem der Ansprüche 1 bis 3, wobei der oder die Referenzgegenstände (8) mit dem daran befestigten Werkstück (9) in eine definierte Position bewegt wird bzw. werden, die bezüglich der ersten Koordinatenmesseinrichtung und/oder bezüglich der zweiten Koordinatenmesseinrichtung festgelegt ist, und wobei zumindest ein Teil der Referenzkoordinaten, die ersten Koordinaten und/oder die zweiten Koordinaten gemessen werden, während sich der oder die Referenzgegenstände (8) in der definierten Position befindet bzw. befinden.

5. Verfahren nach einem der vorhergehenden Ansprüche, wobei in der ersten Koordinatenmesseinrichtung (3) und in der zweiten Koordinatenmesseinrichtung (5) unterschiedliche Messprinzipien zur Messung der Koordinaten angewendet werden.

6. Verfahren nach einem der vorhergehenden Ansprüche, wobei durch die erste Koordinatenmesseinrichtung (20) eine Oberfläche des Werkstücks (9) abgetastet wird und **dadurch** Koordinaten zumindest eines Punktes an der Oberfläche des Werkstücks (9) gemessen werden.

7. Verfahren nach einem der vorhergehenden Ansprüche, wobei durch die zweite Koordinatenmesseinrichtung (16, 17) ein Material des Werkstücks (9) durchstrahlt wird und daraus Koordinaten zumindest eines Punktes des Werkstücks (9) bestimmt werden.

8. Verfahren nach einem der vorhergehenden Ansprüche, wobei durch die zweite Koordinatenmesseinrichtung (16, 17) Messwerte des Werkstücks (9) und/oder eines Referenzgegenstandes (8) in einem örtlichen Bereich gemessen werden, in dem sich ein Rand oder Materialübergang des Werkstücks (9) und/oder des Referenzgegenstandes (8) befindet, und wobei die durch die erste Koordinatenmesseinrichtung (20) gemessenen ersten Koordinaten dazu verwendet werden, eine Position des Randes oder des Materialübergangs und die Messwerte einander zuzuordnen.

9. Verfahren, wobei Koordinaten einer Vielzahl der Werkstücke (9) während und/oder nach einem Herstellungsprozess und/oder Bearbeitungsprozess der Werkstücke (9) gemäß dem Verfahren nach einem der vorhergehenden Ansprüche bestimmt werden.

10. Verfahren nach einem der Ansprüche 1 bis 9, wobei eine Temperatur gemessen wird und eine Veränderung der Temperatur, die während einer Messung durch eine der Koordinatenmesseinrichtungen (3, 5) und/oder zwischen Messungen durch verschiedene der Koordinatenmesseinrichtungen (3, 5) stattfinden kann, festgestellt wird und wobei unter Berücksichtigung von thermischen Ausdehnungskoeffizienten von Materialien der Palette (7) und des Werkstücks (9) Veränderungen der Relativposition und der Skalierungen eines durch die Referenzgegenstände definierten Koordinatensystems und eines werkstückeigenen Koordinatensystems berechnet werden.

11. Messanordnung (1) zum Bestimmen von Koordinaten eines Werkstücks (9), wobei die Messanordnung (1) folgendes aufweist:
- eine erste Koordinatenmesseinrichtung (3) zur Messung von ersten Koordinaten des Werkstücks (9),
- eine zweite Koordinatenmesseinrichtung (5) zur Messung von zweiten Koordinaten des Werkstücks (9),
- eine Bestimmungseinrichtung (11), die mit der ersten und der zweiten Koordinatenmesseinrichtung (3, 5) verbunden ist und die ausgestaltet ist, aus den ersten Koordinaten und aus den zweiten Koordinaten einen gemeinsamen Satz Koordinaten des Werkstücks (9) zu erzeugen, wobei der gemeinsame Satz Koordinaten in einem Koordinatensystem definiert ist, das bezüglich dem Werkstück (9) fest positioniert ist,
- eine Palette (7), an der zumindest ein Referenzgegenstand (8) befestigt ist zur Messung von Referenzkoordinaten des oder der Referenzgegenstände (8) durch die erste und zweite Koordinatenmesseinrichtung (3, 5), wobei der gemeinsame Satz Koordinaten unter Verwendung der Referenzkoordinaten erzeugt wird und wobei das Werkstück (9) auf der Palette befestigt ist oder befestigbar ist.

12. Messanordnung nach dem vorhergehenden Anspruch, mit einer Bewegungseinrichtung (12), die ausgestaltet ist, das Werkstück (9) in eine Messposition zu bringen, in der die erste Koordinatenmesseinrichtung (20) und/oder die zweite Koordinatenmesseinrichtung (16, 17) die ersten bzw. die zweiten Koordinaten des Werkstücks (9) messen können.

13. Messanordnung nach dem vorhergehenden Anspruch, wobei die Bewegungseinrichtung (12) ausgestaltet ist, eine Vielzahl der Werkstücke (9) nacheinander in die Messposition zu bringen.

14. Messanordnung nach einem der Ansprüche 11-13, wobei in die Palette (7) ein Temperatursensor integriert ist.

## Claims

1. Method for determining coordinates of a workpiece (9), in which
- a first coordinate system which is fixedly positioned with reference to the workpiece (9) is defined,
- first coordinates of the workpiece (9) are measured by using a first coordinate measuring device (3),
- second coordinates of the workpiece (9) are measured by using a second coordinate measuring device (5),
- a common set of coordinates in the first coordinate system or in a second coordinate system fixedly positioned with reference to the workpiece (9) is generated from the first coordinates and from the second coordinates,
- the workpiece (9) is fastened on a pallet (7) during the measurements carried out by the coordinate measuring devices (3, 5),
- at least one reference object (8) is fastened on the pallet (7), and
- reference coordinates of the reference object(s) (8) are measured by the first coordinate measuring device (3) and by the second coordinate measuring device (5), and the common set of coordinates is generated by using the reference coordinates.

2. Method according to Claim 1, in which the pallet (7) with the workpiece fastened thereon is transported from a first measuring station (14) in which the workpiece (9) is measured by one of the coordinate measuring devices (3, 5) to a second measuring station (15) in which the workpiece (9) is measured by the other coordinate measuring device (3, 5).

3. Method according to Claim 1 or 2, in which coordinates of the workpiece (9) and reference coordinates of the reference object(s) (8) are measured by the first coordinate measuring device (3), by the second coordinate measuring device (5) or by a further coordinate measuring device, in which information relating to a relative position and orientation of the reference object(s) (8) on the one hand and of the workpiece (9) on the other hand is obtained therefrom, and in which the common set of coordinates is generated by using the information relating to the relative position and orientation.

4. Method according to one of Claims 1 to 3, in which the reference object(s) (8) with the workpiece (9) fastened thereon is or are moved into a defined position that is fixed with reference to the first coordinate measuring device and/or with reference to the second coordinate measuring device, and in which at least some of the reference coordinates, the first coordinates and/or the second coordinates are measured while the reference object(s) (8) is or are located in the defined position.

5. Method according to one of the preceding claims, in which different measurement principles are applied for measuring the coordinates in the first coordinate measuring device (3) and in the second coordinate measuring device (5).

6. Method according to one of the preceding claims, in which a surface of the workpiece (9) is scanned by the first coordinate measuring device (20), and coordinates of at least one point on the surface of the workpiece (9) are measured thereby.

7. Method according to one of the preceding claims, in which a material of the workpiece (9) is transirradiated by the second coordinate measuring device (16, 17), and coordinates of at least one point of the workpiece (9) are determined therefrom.

8. Method according to one of the preceding claims, in which measured values of the workpiece (9) and/or of a reference object (8) are/is measured by the second coordinate measuring device (16, 17) in a spatial area in which an edge or material transition of the workpiece (9) and/or of the reference object (8) is located, and in which the first coordinates measured by the first coordinate measuring device (20) are used for the purpose of assigning to one another a position of the edge or of the material transition and the measured values.

9. Method in which coordinates of a multiplicity of workpieces (9) are determined during and/or after a production process and/or machining process of the workpieces (9) in accordance with the method according to one of the preceding claims.

10. Method according to one of Claims 1 to 9, in which a temperature is measured and a variation in the temperature that can take place during a measurement by one of the coordinate measuring devices (3, 5) and/or between measurements by different ones of the coordinate measuring devices (3, 5) is determined, and in which variations in the relative position and the scalings of a coordinate system defined by the reference objects and of a coordinate system belonging to the workpiece are calculated taking account of coefficients of thermal expansion of materials of the pallet (7) and of the workpiece (9).

11. Measuring arrangement (1) for determining coordinates of a workpiece (9), in which the measuring arrangement (1) exhibits the following:
- a first coordinate measuring device (3) for measuring first coordinates of the workpiece (9),
- a second coordinate measuring device (5) for measuring second coordinates of the workpiece (9).
- a determining device (11) that is connected to the first and the second coordinate measuring device (3, 5) and is fashioned for generating a common set of coordinates for the workpiece (9) from the first coordinates and from the second coordinates, the common set of coordinates being defined in a coordinate system that is fixedly positioned with reference to the workpiece (9),
- a pallet (7) on which at least one reference object (8) is fastened for the measurement of reference coordinates of the reference object(s) (8) by the first and second coordinate measuring devices (3, 5), the common set of coordinates being generated by using the reference coordinates and the workpiece (9) being, or being capable of being fastened, on the pallet.

12. Measuring arrangement according to the preceding claim, having a movement device (12) that is fashioned for bringing the workpiece (9) into a measuring position in which the first coordinate measuring device (20) and/or the second coordinate measuring device (16, 17) can measure the first and/or the second coordinates of the workpiece (9).

13. Measuring arrangement according to the preceding claim, in which the movement device (12) is fashioned for sequentially bringing a multiplicity of the workpieces (9) into the measuring position.

14. Measuring arrangement according to one of Claims 11-13, in which a temperature sensor is integrated in the pallet (7).

## Revendications

1. Procédé de détermination de coordonnées d'une pièce (9), dans lequel
- un premier système de coordonnées est fixé, qui est positionné de manière fixe en ce qui concerne la pièce (9),
- des premières coordonnées de la pièce (9) sont mesurées en utilisant un premier dispositif de mesure de coordonnées (3),
- des secondes coordonnées de la pièce (9) sont mesurées en utilisant un second dispositif de mesure de coordonnées (5),
- un jeu commun de coordonnées est généré dans le premier système de coordonnées ou dans un second système de coordonnées positionné de manière fixe en ce qui concerne la pièce (9) à partir des premières coordonnées et à partir des secondes coordonnées,
- la pièce (9) est fixée sur une palette (7) au cours des mesures effectuées par les dispositifs de mesure de coordonnées (3, 5),
- au moins un objet de référence (8) est fixé à la palette (7),
- des coordonnées de référence du ou des objet(s) de référence (8) sont mesurées grâce au premier dispositif de mesure de coordonnées (3) et grâce au second dispositif de mesure de coordonnées (5) et dans lequel le jeu commun de coordonnées est généré en utilisant des coordonnées de référence.

2. Procédé selon la revendication 1, dans lequel la palette (7) est transportée avec la pièce fixée dessus depuis un premier poste de mesure (14), dans lequel la pièce (9) est mesurée par l'un des dispositifs de mesure de coordonnées (3, 5), jusqu'à un second poste de mesure (15), dans lequel la pièce (9) est mesurée par l'autre dispositif de mesure de coordonnées (3, 5).

3. Procédé selon la revendication 1 ou 2, dans lequel des coordonnées de la pièce (9) et des coordonnées de référence du ou des objets de référence (8) sont mesurées grâce au premier dispositif de mesure de coordonnées (3), grâce au second dispositif de mesure de coordonnées (5) ou grâce à un autre dispositif de mesure de coordonnées, des informations concernant une position relative et une orientation du ou des objet(s) de référence (8) d'une part et de la pièce (9) d'autre part étant tirées de là et le jeu commun de coordonnées étant généré en utilisant les informations concernant la position relative et l'orientation.

4. Procédé selon l'une quelconque des revendications 1 à 3, dans lequel le ou les objet(s) de référence (8) est ou sont déplacé(s) dans une position définie avec la pièce (9) fixée dessus, ladite position définie étant fixée en ce qui concerne le premier dispositif de mesure de coordonnées et/ou en ce qui concerne le second dispositif de mesure de coordonnées, et dans lequel au moins une partie des coordonnées de référence, les premières coordonnées et/ou les secondes coordonnées sont mesurées, tandis que le ou les objet(s) de référence (8) se trouve ou se trouvent dans la position définie.

5. Procédé selon l'une quelconque des revendications précédentes, dans lequel différents principes de mesure sont appliqués en vue de la mesure des coordonnées dans le premier dispositif de mesure de coordonnées (3) et dans le second dispositif de mesure de coordonnées (5).

6. Procédé selon l'une quelconque des revendications précédentes, dans lequel une surface de la pièce (9) est balayée par le premier dispositif de mesure de coordonnées (20) et, de cette manière, des coordonnées d'au moins un point au niveau de la surface de la pièce (9) sont mesurées.

7. Procédé selon l'une quelconque des revendications précédentes, dans lequel un matériau de la pièce (9) est radiographié par le second dispositif de mesure de coordonnées (16, 17) et des coordonnées d'au moins un point de la pièce (9) sont déterminées à partir de là.

8. Procédé selon l'une quelconque des revendications précédentes, dans lequel des valeurs de mesure de la pièce (9) et/ou d'un objet de référence (8) sont mesurées par le second dispositif de mesure de coordonnées (16, 17) dans une zone localisée, dans laquelle se trouve un bord ou une transition de matériau de la pièce (9) et/ou de l'objet de référence (8), et dans lequel les premières coordonnées mesurées par le premier dispositif de mesure de coordonnées (20) sont utilisées afin d'affecter une position du bord ou de la transition de matériau et les valeurs de mesure les unes aux autres.

9. Procédé, dans lequel des coordonnées d'une pluralité de pièces (9) sont déterminées pendant et/ou après un processus de fabrication et/ou un processus d'usinage des pièces (9) selon le procédé selon l'une quelconque des revendications précédentes.

10. Procédé selon l'une quelconque des revendications 1 à 9, dans lequel une température est mesurée et une modification de la température, qui peut avoir lieu au cours d'une mesure par un des dispositifs de mesure de coordonnées (3, 5) et/ou entre des mesures par plusieurs des dispositifs de mesure de coordonnées (3, 5), est établie et dans lequel des modifications de la position relative et des graduations d'un système de coordonnées défini par les objets de référence et d'un système de coordonnées propre à la pièce sont calculées en tenant compte de coefficients de dilatation thermiques de matériaux de la palette (7) et de la pièce (9).

11. Dispositif de mesure (1) destiné à la détermination de coordonnées d'une pièce (9), dans lequel le dispositif de mesure (1) présente ce qui suit :
- un premier dispositif de mesure de coordonnées (3) destiné à la mesure de premières coordonnées de la pièce (9),
- un second dispositif de mesure de coordonnées (5) destiné à la mesure de secondes coordonnées de la pièce (9),
- un dispositif de détermination (11), qui est relié avec le premier et le second dispositif de mesure de coordonnées (3, 5) et qui est conçu afin de générer un jeu commun de coordonnées de la pièce (9) à partir des premières coordonnées et à partir des secondes coordonnées, dans lequel le jeu commun de coordonnées est défini dans un système de coordonnées, qui est positionné de manière fixe en ce qui concerne la pièce (9),
- une palette (7), sur laquelle est fixé au moins un objet de référence (8) en vue de la mesure de coordonnées de référence du ou des objet(s) de référence (8) par le premier ou le second dispositif de mesure de coordonnées (3, 5), le jeu commun de coordonnées étant généré en utilisant des coordonnées de référence et la pièce (9) étant fixée ou pouvant être fixée sur la palette.

12. Dispositif de mesure selon la revendication précédente, comportant un dispositif de déplacement (12), qui est conçu afin de mettre la pièce (9) dans une position de mesure, dans laquelle le premier dispositif de mesure de coordonnées (20) et/ou le second dispositif de mesure de coordonnées (16, 17) peuvent mesurer les premières ou les secondes coordonnées de la pièce (9).

13. Dispositif de mesure selon la revendication précédente, dans lequel le dispositif de déplacement (12) est conçu afin de mettre une pluralité de pièces (9) les unes après les autres dans la position de mesure.

14. Dispositif de mesure selon l'une quelconque des revendications 11 à 13, dans lequel un capteur de température est intégré dans la palette (7).
